(19) Europäisches Patentamt
European Patent Office
Office européen des brevets

(11) **EP 4 670 925 A1**

(12) **EUROPEAN PATENT APPLICATION**

(43) Date of publication:
**31.12.2025 Bulletin 2026/01**

(21) Application number: **25178443.5**

(22) Date of filing: **23.05.2025**

(51) International Patent Classification (IPC):
**B25J 9/16** $^{(2006.01)}$

(52) Cooperative Patent Classification (CPC):
**B25J 9/1664;** B25J 9/161; B25J 9/163

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.06.2024 US 202418759669**

(71) Applicant: **INTEL Corporation**
**Santa Clara, CA 95054 (US)**

(72) Inventors:
• **MACIAS GARCIA, Edgar**
**45010 Zapopan (MX)**
• **CAMPOS MACIAS, Leobardo**
**44240 Guadalajara (MX)**
• **COURDOURIER MARURI, Hector**
**44580 Guadalajara (MX)**
• **DE LA GUARDIA GONZALEZ, Rafael**
**48940 Leioa (ES)**
• **GONZALEZ AGUIRRE, David**
**Hillsboro, 97124 (US)**
• **IBARRA VON BORSTEL, Alejandro**
**Buda, 78610 (US)**
• **LOPEZ MEYER, Paulo**
**45019 Zapopan (MX)**
• **TUREK, Javier**
**Beaverton, 97006 (US)**
• **ZAMORA ESQUIVEL, Julio**
**West Sacramento, 95605 (US)**

(74) Representative: **HGF**
**HGF Limited**
**4th Floor, 1 City Square**
**Leeds LS1 2AL (GB)**

(54) **COBOT MODEL GENERATION BASED ON A GENERIC ROBOT MODEL**

(57) An apparatus, including: an interface configured to receive a target end-effector pose of a cobot; processing circuitry configured to: generate in a generic robot model a joint trajectory based on the target end-effector pose; employ a trained neural network model to map the joint trajectory generated in the generic robot model into a cobot model; and generate a movement instruction to control a movement of the cobot based on the joint trajectory mapped to the cobot model, wherein the generic robot model has a number of degrees of freedom that is equal to or greater than that of the cobot model.

## FIG 1A

100A
Calibration Stage Overview

EP 4 670 925 A1

# Description

## Technical Field

Aspects described herein generally relate to cobot model generation and, more particularly, to cobot model generation based on a generic robot model having more degrees of freedom than the cobot model.

## Background

Collaborative robotics (cobots) is a rapidly expanding sector in Artificial Intelligence (AI) and robotics. Unlike traditional industrial robots, cobots operate in diverse and dynamic environments that are often unpredictable and not predefined by the manufacturer. Additionally, cobots frequently need to be programmed by individuals without specialized robotics expertise. A fundamental challenge in this context is the programming of motion skills where the cobot's end-effector needs to reach a pose accurately within its task space, such as in pick-and-place operations. Currently, this is predominantly achieved through programming by demonstration, which is typically performed one robot at a time. However, this approach is not scalable in environments where multiple robots of various models and manufacturers are present. While inverse kinematics solvers are available, they require precise robot models and expert supervision to ensure the solutions are accurate and meet specific requirements.

Additionally, there are autoencoder-style networks for solving batch inverse kinematics problems using continuous normalizing flows. These networks can quickly find multiple inverse kinematics solutions from given target poses and latent variables sampled from a tractable normal distribution. However, each cobot requires a complex training process from scratch, and inference involves simulating a dynamic system on expensive graphics processing units (GPUs). A generative graphical inverse kinematics solver that is "cobot-agnostic" enables a single model to provide inverse kinematics solutions for various cobots. However, it is limited to cobots with revolute joints, does not consider joint limits or self-collisions, and has relatively low position accuracy. Additionally, it suffers from manifold mismatches and mode collapse, limiting the diversity of solutions and underutilizing the available space for the robot.

## Brief Description of the Figures

FIG. 1A illustrates an overview diagram of the calibration stage.

FIG. 1B illustrates a diagram of dataset generation and neural network model training within the calibration stage.

FIG. 1C illustrates an encoder structure 100C of a neural network model.

FIG. 2A illustrates a diagram of an inference stage, in accordance with aspects of the disclosure.

FIG. 2B illustrates a diagram of an inference process, in accordance with aspects of the disclosure.

FIG. 3A illustrates a diagram of a three-degree-of-freedom cobot arm and its corresponding Denavit-Hattenberg (DH) parameters, in accordance with aspects of the disclosure.

FIG. 3B illustrates a diagram of a five-degree-of-freedom generic robot arm and its corresponding DH parameters, in accordance with aspects of the disclosure.

FIG. 3C illustrates a diagram of joint trajectories for a three-degree-of-freedom cobot arm, in accordance with aspects of the disclosure.

FIG. 3D illustrates a diagram of joint trajectories for a five-degree-of-freedom generic robot arm in accordance with aspects of the disclosure.

FIG. 4 illustrates a computing device, in accordance with aspects of the disclosure.

## Detailed Description

This disclosure addresses the inverse kinematics of collaborative robots (cobots) by transferring trajectories from a generic model to a user-specified model using user references and prior task information. Initially, a generic robot model is developed to encompass various end-effectors and redundant degrees of freedom, ensuring coverage across a wide workspace. Subsequently, a neural network is trained to convert solutions from the generic model into the target cobot's configuration, leveraging data obtained during calibration. Finally, an iterative refinement process further enhances the accuracy of the network-generated solution to meet the precise requirements of the defined task.

### I. Overview

The disclosed system operates in two stages: calibration and inference.

As detailed in Section II, calibration is conducted offline using user-provided data. Subsequently, various neural networks and analytic models are developed to handle subsequent user queries or requirements.

As described in Section III, after calibration, the system can accept online queries from the user and generate trajectories for the specified cobot using the trained model and refinement algorithms.

II. Offline Configuration and Calibration

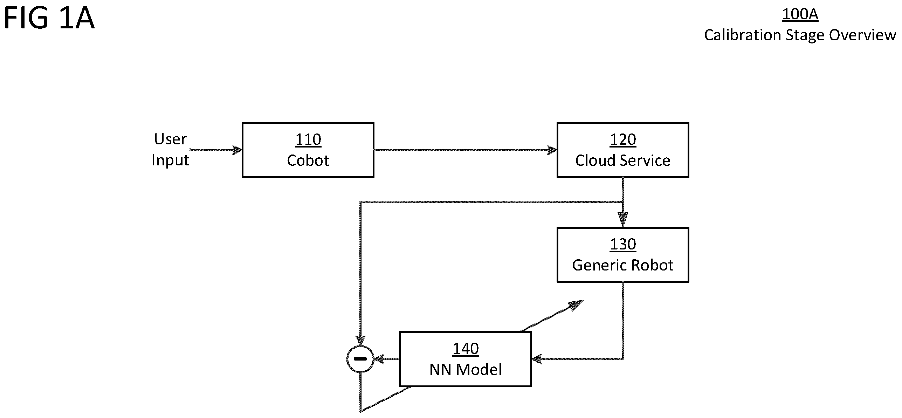

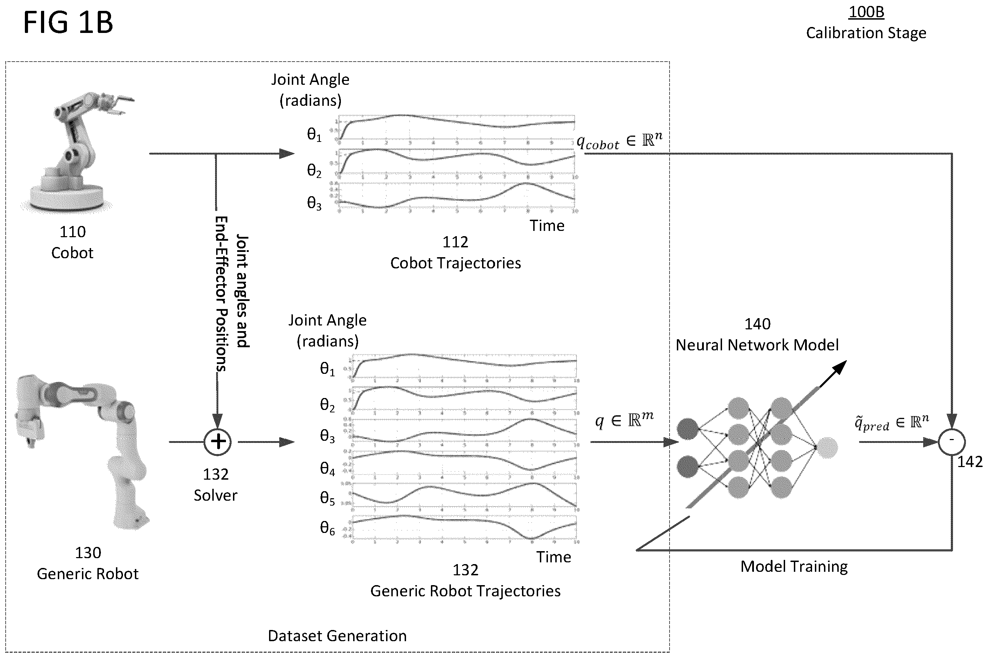

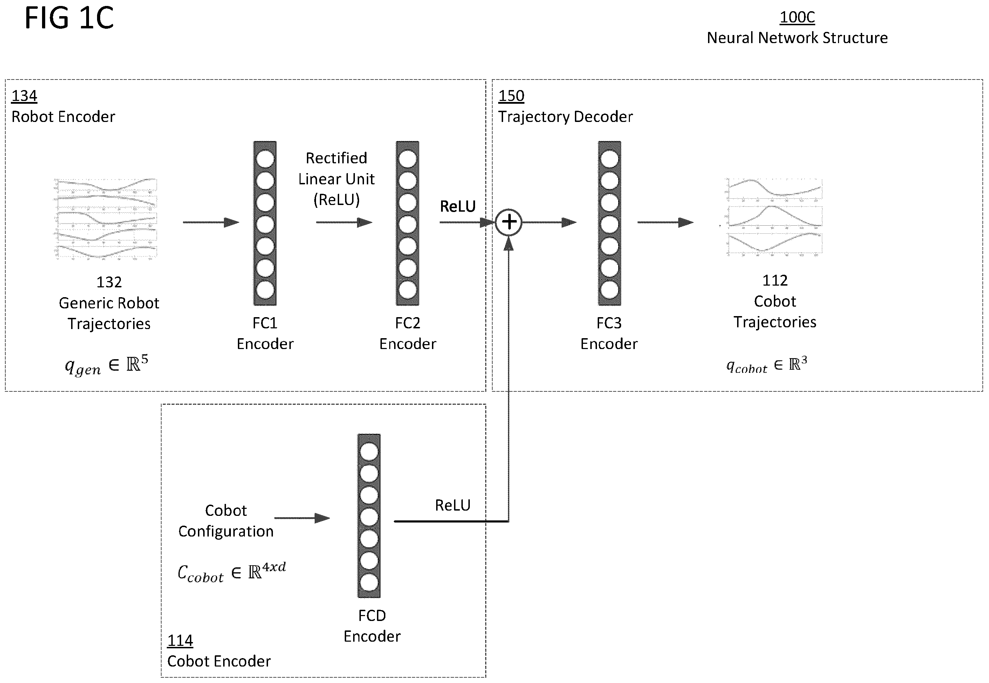

FIGs. 1A-1D illustrate diagrams of the calibration stage 100, in accordance with aspects of the disclosure. During this stage, initial configurations are set, and user-provided data is collected to train and calibrate the necessary models. FIG. 1A shows an overview diagram 100A of the calibration stage. FIG. 1B presents a diagram 100B of dataset generation and neural network model training within the calibration stage. FIG. 1C depicts the encoder structure 100C of a neural network model.

Robot kinematics are addressed using user references and prior task information. Initially, a generic robot model 130 is established with multiple end-effectors and redundant degrees of freedom to encompass extensive workspaces, including an inverse kinematics model for the generic robot. Furthermore, a set of analytic and geometric methods based on Conformal Geometric Algebra (CGA) is incorporated to effectively handle various generic robot tasks such as grasping and manipulation.

Before tackling specific programming tasks, the user inputs information about the cobot 110, which may include a dataset of joint angles and end-effector positions or a physical model description. A forward kinematics model of the cobot 110 can then be created based on this user-provided data. Using both the generic robot model 130 and the cobot model 110, the system trains encoder/decoder functions of a neural network 140 to map corresponding configuration spaces during the calibration stage.

A. Configuration of Generic Robot Model 130

Initially, a generic robot model 130 is configured with redundant degrees of freedom, housed in a server or cloud-based processing circuitry. Analytic methods are designed to solve inverse-kinematics across a volumetric space x E $R^3$, accommodating trajectory behaviors and constraints for any end-effector pose.

B. Configuration of Cobot Model 110

A user inputs a Unified Robotics Description Format (URDF) or a similar file outlining cobot 110's geometry, including Denavit-Hartenberg (DH) parameters. Additionally, the user may provide a dataset comprising joint angles and end-effector positions captured from cobot 110, which serves to either train a model or refine forward kinematics equations. Those familiar with robotics can specify kinematic parameters, while those less so can collect dynamic cobot 110 trajectories and end-effector positions, either by manually moving cobot 110 or recording various end-effector placements.
The generic robot model 130 has at least as many redundant degrees of freedom as the cobot model 110.

C. Calibration Process

Leveraging user-provided data and a geometric model constructed from the DH parameters, a dataset is compiled, encompassing joint references for the generic robot 130 and user-specified cobot configurations.
For the joint trajectories provided by the user, a solution (q E $R^m$) is calculated for the generic robot 130, using the collected end-effector positions. Using the geometric model of the cobot 110 and the generic robot model 130, joint references are determined for both, including different trajectory behaviors.
Once established, an encoder-decoder neural network model 140 structure is trained using the dataset to map trajectories computed for generic robot model 130 ( $q \in \mathbb{R}^m$ ) to those for cobot *110* ( $q_{cobot} \in \mathbb{R}^n$ ), as depicted in FIG. 1B. Fundamentally, the cobot model 110 is generated based on the joint angles and end-effector positions captured for the cobot 110.
An objective is to replicate cobot trajectories using neural network model 140, which processes as many trajectories as the number of degrees of freedom of the generic robot. Essentially, the difference 142 between neural network model 140's output and actual cobot model 110 trajectories represents predicted trajectory error, signifying the gap between cobot 110's actual and anticipated paths.
During training, the user may input additional information into neural network model 140 (e.g., desired trajectory behavior) to introduce further features or solution requirements. Upon server introduction of new datasets, a set of pre-trained weights can be acquired, streamlining training processes, such as transfer learning methods.

III. Online Configuration

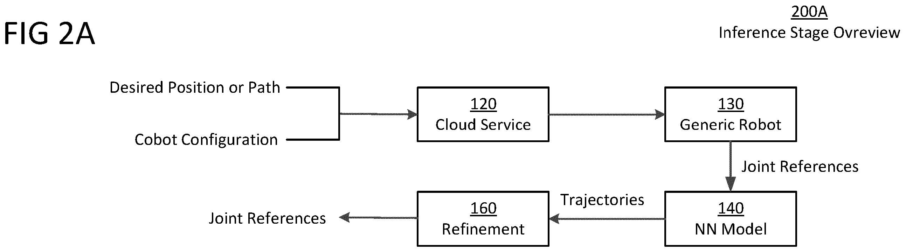

FIG. 2A illustrates an overview diagram of the inference stage 200A, in accordance with aspects of the disclosure.
Once the neural network model 140 has been trained, as described in Section II above, it enters inference mode. The user can submit queries containing one or more target end-effector poses, along with instructions provided in a configuration file or serialized data structure. Tasks are executed on the generic robot 130, and the trained neural network model 140 generates trajectories corresponding to the user's input configuration. These trajectories can be further refined 160 using information gathered during calibration, such as forward kinematics.

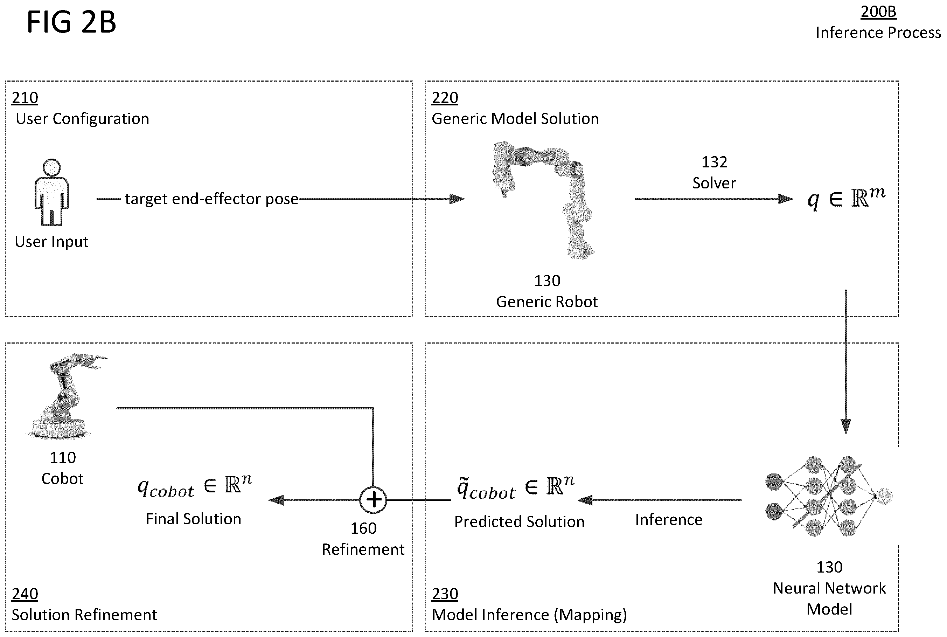

FIG. 2B illustrates a diagram of an inference process 200B, in accordance with aspects of the disclosure, where a user introduces queries or requirements to obtain the required joint trajectories for manipulating the cobot 110.

A. User Configuration 210

The user can input task descriptions, including one or more target end-effector poses, initial configurations, or task constraints in a configuration file (e.g., XML, YAML, etc.). This file may also include task-related objectives like smoothness or safety constraints. Additionally, users can invoke predefined parameterized skills.

B. Generic Model Solution 220

The user queries are sent to the server and solved using the generic robot model 130, producing a set of joint references or trajectories ( $q \in \mathbb{R}^m$ ). The generic robot model 130 possesses at least as many degrees of freedom as cobot model 110.

C. Model Inference 230

The trained neural network model 140, with its encoder-decoder structure, maps trajectories generated for the generic robot 130 to the configuration of cobot 110 ( $\tilde{q}_{cobot} \in \mathbb{R}^n$ ). Processing circuitry then generates a movement instruction to cobot 110 based on the joint trajectories mapped to the cobot model 110.

D. Solution Refinement 240

Finally, to ensure trajectory compatibility and minimize end-effector error according to the task requirements, refinement of generated trajectories is conducted using cobot 110's geometric model via an established iterative method. The refined solution ($q_{cobot} \in R^n$) is provided to the user upon reaching the desired error threshold.

IV. Example

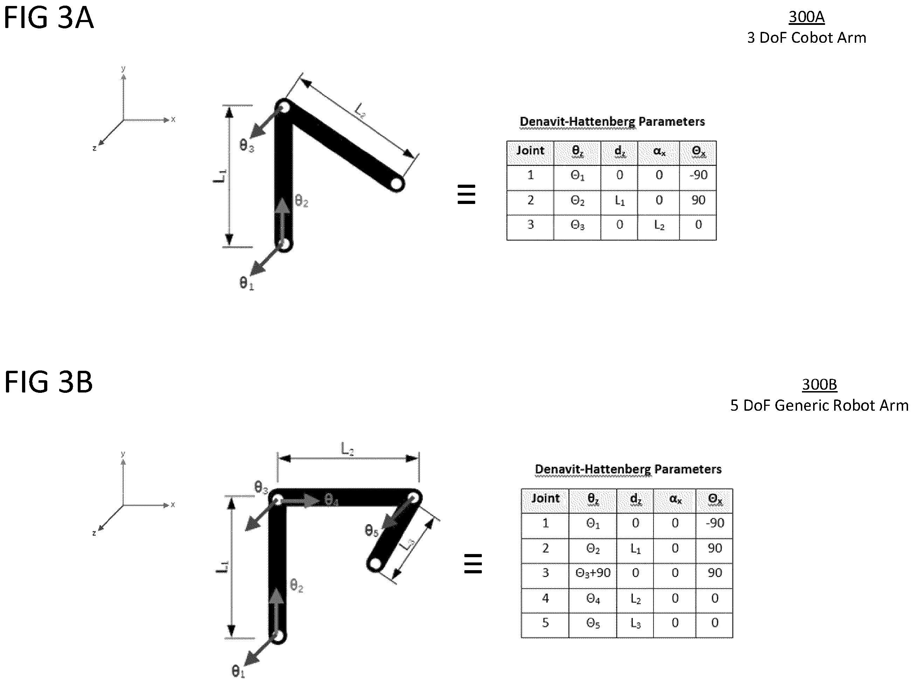

FIG. 3A illustrates a three-degree-of-freedom cobot arm and its corresponding DH parameters, while FIG. 3B depicts a five-degree-of-freedom generic robot arm and its DH parameters, showcasing model training by mapping trajectories from a generic robot 130 to a cobot 110 with fewer joints.

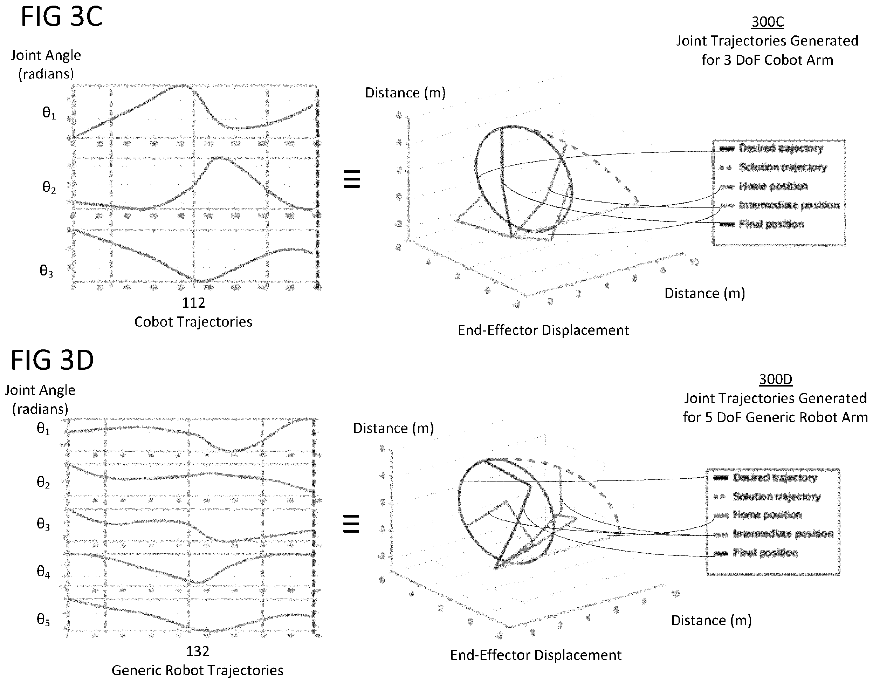

FIG. 3C illustrates joint trajectories 300C for a three-degree-of-freedom cobot arm, while FIG. 3D shows joint trajectories 300D for a five-degree-of-freedom generic robot arm. These figures exemplify how trajectories from the generic robot 130 are translated to cobot 110, with individual joint trajectories and 3D end-effector displacements illustrated across various positions.

Initially, a dataset is generated with the neural network model 140 aimed at mapping trajectories from the generic robot 130 into the cobot 110's space $q_{cob} = model(q_{gen})$). This requires a dataset comprising tuples ($q_{cob}$, $q_{gen}$) referencing the same end-effector position on both robots.

To simulate user-provided trajectories on the generic robot 130 and their equivalents, a set of joint trajectories 112, 132 are generated using an inverse kinematic algorithm over a desired end-effector path, such as a circular 3D trajectory resulting in a path of 177 points. At each point of the trajectory, the neural network 140 is intended to map every point of the trajectories from the robot 130 into the behavior of the cobot 110. These trajectories are visualized in FIGs. 3C and 3D, showcasing individual joint trajectories on the left and 3D end-effector displacements on the right. Each configuration includes positions at home, various intermediate stages, and the final position.

The neural network model 140 is trained following dataset generation, mapping generic robot trajectories 132 ( $q_{gen} \in \mathbb{R}^5$ ) to cobot trajectories 112 ( $q_{cob} \in \mathbb{R}^3$ ), incorporating cobot 110's configuration as an additional input feature.

FIG. 1C illustrates the model architecture 100C, comprising three stages: robot encoder 134, cobot encoder 114, and trajectory decoder 150.

The robot encoder 134 consists of fully connected layers FC1 and FC2, decoding generic robot 130 configurations into feature sets.

Simultaneously, cobot encoder 114 maps a parametrized version of cobot DH parameters to a feature vector concatenated with the robot encoder's output.

The trajectory decoder 150 then maps robot and cobot features to an output vector generating joint trajectories 112 for cobot 110.

To facilitate training for new cobots, a comprehensive dataset can be generated using multiple cobot configurations. An encoder-decoder architecture with sufficient output neurons is trained, focusing backpropagation solely on neurons with required references. Parametrized DH parameters serve as additional inputs for the neural network model 140, accommodating various configurations with identical degrees of freedom. After training, encoder stage 114 and 134 weights can be retained, with only the trajectory decoder 150 replaced for specific cobot degrees of freedom. During training, only the trajectory decoder 150 undergoes complete retraining.

The system adapts to any cobot manipulator through a calibration process using user-provided data, requiring basic cobot joint data to generate an inverse kinematics solution.

The same generic model is employed to generate solutions for various cobot types and models, requiring only a simplified encoder/decoder for each specific cobot.

Offered as either a cloud service or integrated offline solution tailored to manufacturer-specific products, the system optimizes models and algorithms for the manufacturer's hardware.

V. Computing Device

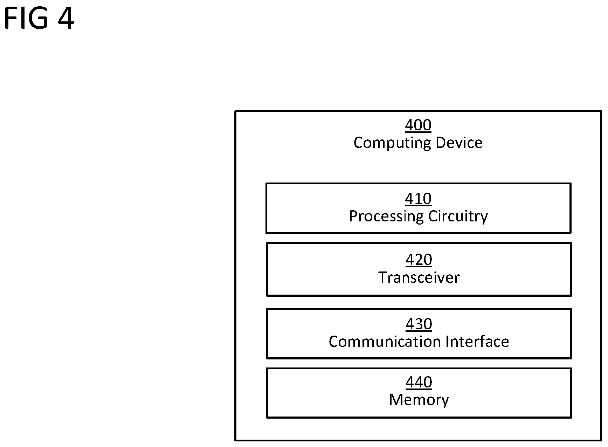

FIG. 4 illustrates a computing device 400 in accordance with aspects of the disclosure.

The computing device 400 may be identified with a central controller and be implemented as any suitable network infrastructure component, which may be implemented as a cloud/edge network server, controller, computing device, etc. The computing device 400 may serve the cobot 110, the generic robot 130, the neural network model 140, and the refinement 160, in accordance with the various techniques discussed herein. To do so, the computing device 400 may include processor circuitry 410, a transceiver 420, a communication interface 430, and a memory 440. The components shown in FIG. 4 are provided for ease of explanation, and the computing device 400 may implement additional, fewer, or alternative components than those shown in FIG. 4.

The processor circuitry 410 may be operable as any suitable number and/or type of computer processor that may function to control the computing device 400. The processor circuitry 410 may be identified with one or more processors (or suitable portions thereof) implemented by the computing device 400. The processor circuitry 410 may be identified with one or more processors such as a host processor, a digital signal processor, one or more microprocessors, graphics processors, baseband processors, microcontrollers, an application-specific integrated circuit (ASIC), a portion (or the entirety of) a field-programmable gate array (FPGA), etc.

In any case, the processor circuitry 410 may be operable to execute instructions to perform arithmetic, logic, and/or input/output (I/O) operations and/or to control the operation of one or more components of the computing device 400 to perform various functions as described herein. The processor circuitry 410 may include one or more microprocessor cores, memory registers, buffers, clocks, etc. It may generate electronic control signals associated with the components of the computing device 400 to control and/or modify the operation of those components. The processor circuitry 410 may communicate with and/or control functions associated with the transceiver 420, the communication interface 430, and/or the memory 440. The processor circuitry 410 may additionally perform various operations to control the communications, communications scheduling, and/or operation of other network infrastructure components communicatively coupled to the computing device 400.

The transceiver 420 may be implemented as any suitable number and/or type of components operable to transmit and/or receive data packets and/or wireless signals in accordance with any suitable number and/or type of communication protocols. The transceiver 420 may include any suitable type of components to facilitate this functionality, including components associated with known transceiver, transmitter, and/or receiver operations, configurations, and implementations. Although shown as a transceiver in FIG. 4, the transceiver 420 may include any suitable number of transmitters, receivers, or combinations thereof, which may be integrated into a single transceiver or as multiple transceivers or transceiver modules. The transceiver 420 may include components typically identified with a radio frequency (RF) front end and include, for example, antennas, ports, power amplifiers (PAs), RF filters, mixers, local oscillators (LOs), low noise amplifiers (LNAs), up-converters, down-converters, channel tuners, etc.

The communication interface 430 may be implemented as any suitable number and/or type of components operable to facilitate the transceiver 420 to receive and/or transmit data and/or signals in accordance with one or more communication protocols, as discussed herein. The communication interface 430 may be implemented as any suitable number and/or type of components operable to interface with the transceiver 420, such as analog-to-digital converters (ADCs), digital-to-analog converters, intermediate frequency (IF) amplifiers and/or filters, modulators, demodulators, baseband processors, and the like. The communication interface 430 may thus operate in conjunction with the transceiver 420 and form part of an overall communication circuitry implemented by the computing device 400, which may be implemented via the computing device 400 to transmit commands and/or control signals to perform any of the functions described herein.

The memory 440 is operable to store data and/or instructions such that when the instructions are executed by the processor circuitry 410, they cause the computing device 400 to perform various functions as described herein. The memory 440 may be implemented as any known volatile and/or non-volatile memory, including, for example, read-only memory (ROM), random access memory (RAM), flash memory, a magnetic storage medium, an optical disk, erasable programmable read-only memory (EPROM), programmable read-only memory (PROM), etc. The memory 440 may be non-removable, removable, or a combination of the two. The memory 440 may be implemented as a non-transitory computer-readable medium storing one or more executable instructions such as logic, algorithms, code, etc.

As further discussed below, the instructions, logic, code, etc., stored in the memory 440 are represented by the various modules/engines as shown in FIG. 4. Alternatively, when implemented via hardware, the modules/engines shown in FIG. 4 associated with the memory 440 may include instructions and/or code to facilitate control and/or monitoring of the operation of such hardware components. In other words, the modules/engines shown in FIG. 4 are provided to facilitate an explanation of the functional association between hardware and software components. Thus, the processor circuitry 410 may execute the instructions stored in these respective modules/engines in conjunction with one or more hardware components to perform the various functions discussed herein.

Various aspects described herein may utilize one or more machine learning models for the cobot 110, the generic robot 130, the neural network model 140, and the refinement 160. The term "model," as used herein, may be understood to mean any type of algorithm that provides output data from input data (e.g., any type of algorithm that generates or calculates output data from input data). A machine learning model can be executed by a computing system to progressively improve the performance of a particular task. In some aspects, the parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be tuned during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, each of the machine learning models may utilize supervised learning, semi-supervised learning, unsupervised learning, or reinforcement learning techniques.

In supervised learning, the model may be built using a training set of data that includes both the inputs and the corresponding desired outputs (illustratively, each input may be associated with a desired or expected output for that input). Each training instance may include one or more inputs and a desired output. Training may involve iterating through training instances and using an objective function to teach the model to predict the output for new inputs (illustratively, for inputs not included in the training set). In semi-supervised learning, a portion of the inputs in the training set may lack corresponding desired outputs (e.g., one or more inputs may not be associated with any desired or expected output).

In unsupervised learning, the model may be built from a training set of data that includes only inputs and no desired outputs. The unsupervised model may be used to find structure in the data (e.g., grouping or clustering of data points), for example, by discovering patterns in the data. Techniques that may be implemented in an unsupervised learning model may, for example, self-organizing maps, nearest-neighbor mapping, k-means clustering, and singular value decomposition.

Reinforcement learning models may include positive or negative feedback to improve accuracy. A reinforcement learning model may attempt to maximize one or more goals/rewards. Techniques that may be implemented in a reinforcement learning model may include, for example, Q-learning, temporal difference (TD), and deep adversarial networks.

Various aspects described herein may utilize one or more classification models. In a classification model, outputs may be restricted to a limited set of values (e.g., one or more classes). The classification model may output a class for an input set of one or more input values. An input set may include sensor data, such as image data, radar data, LIDAR (light detection and ranging) data, and the like. A classification model as described herein may, for example, classify certain driving conditions and/or environmental conditions, such as weather conditions, road conditions, and the like. References herein to classification models may contemplate a model that implements, for example, one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (e.g., starting from or using an input set of one or more values). References herein to regression models may contemplate a model that implements, for example, one or more of the following techniques (or other suitable techniques): linear regression, decision trees, random forests, or neural networks.

A machine learning model described herein may be or include a neural network. The neural network may be any type of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network can have any number of layers. The training of the neural network (e.g., the adaption of the layers of the neural network) may use or be based on any kind of training principle, such as backpropagation (e.g., using the backpropagation algorithm).

The techniques of this disclosure may also be described in the following examples.

Example 1. An apparatus, comprising: an interface operable to receive a target end-effector pose of a cobot; processing circuitry operable to: generate in a generic robot model a joint trajectory based on the target end-effector pose; employ a trained neural network model to map the joint trajectory generated in the generic robot model into a cobot model; and generate a movement instruction to control a movement of the cobot based on the joint trajectory mapped to the cobot model, wherein the generic robot model has a number of degrees of freedom that is equal to or greater than that of the cobot model.

Example 2. The apparatus of example 1, wherein the processing circuitry is further operable to: iteratively refine the joint trajectory in the cobot model based on a geometric model of the cobot until the refined joint trajectory reaches a target error threshold.

Example 3. The apparatus of one or more of examples 1-2, wherein the generic robot model has redundant degrees of freedom at least equal to those of the cobot model.

Example 4. The apparatus of one or more of examples 1-3, wherein the processing circuitry is further operable to: receive joint angles and end-effector positions captured for the cobot; and generate the cobot model based on the joint angles and end-effector positions captured for the cobot.

Example 5. The apparatus of one or more of examples 1-4, wherein the processing circuitry is further operable to train the neural network model using the cobot model and a plurality of target end-effector poses.

Example 6. The apparatus of one or more of examples 1-5, wherein the processing circuitry is further operable to: receive a universal robot model file that includes a physical description of the cobot; and generate the cobot model based on the received universal robot model file.

Example 7. The apparatus of one or more of examples 1-6, wherein the processing circuitry is further operable to train the neural network model using the cobot model and a plurality of target end-effector poses.

Example 8. The apparatus of one or more of examples 1-7, wherein the universal robot model file is a Unified Robotics Description Format (URDF) file.

Example 9. The apparatus of one or more of examples 1-8, wherein the processing circuitry is further operable to: receive universal robot model files that include physical descriptions of a plurality of potential cobots having different configurations, or receive joint angles and end-effector positions captured for the plurality of potential cobots having different configurations; generate a plurality of cobot models based on the received universal robot model files or joint angles and end-effector positions of the plurality of potential cobots; and train the neural network model using the plurality of cobot models and a plurality of target end-effector poses.

Example 10. The apparatus of one or more of examples 1-9, wherein the processing circuitry is located in the cloud.

Example 11. A component of a system, comprising: processing circuitry; and a non-transitory computer-readable storage medium including instructions that, when executed by the processing circuitry, cause the processing circuitry to: generate in a generic robot model a joint trajectory based on a target end-effector pose of a cobot; employ a trained neural network model to map the joint trajectory generated in the generic robot model into a cobot model; and generate a movement instruction to control a movement of the cobot based on the joint trajectory mapped to the cobot model, wherein the generic robot model has a number of degrees of freedom that is equal to or greater than that of the cobot model.

Example 12. The component of example 11, wherein the instructions further cause the processing circuitry is further operable to: iteratively refine the joint trajectory in the cobot model based on a geometric model of the cobot until the refined joint trajectory reaches a target error threshold.

Example 13. The component of one or more of examples 11-12, wherein the generic robot model has redundant degrees of freedom at least equal to those of the cobot.

Example 14. The component of one or more of examples 11-13, wherein the instructions further cause the processing circuitry to: receive joint angles and end-effector positions captured for the cobot; and generate the cobot model based on the joint angles and end-effector positions captured for the cobot.

Example 15. The component of one or more of examples 11-14, wherein the instructions further cause the processing circuitry to train the neural network model using the cobot model and a plurality of target end-effector poses.

Example 16. The component of one or more of examples 11-15, wherein the instructions further cause the processing circuitry to: receive a universal robot model file that includes a physical description of the cobot; and generate the cobot model based on the received universal robot model file.

Example 17. The component of one or more of examples 11-16, wherein the instructions further cause the processing circuitry to train the neural network model using the cobot model and a plurality of target end-effector poses.

Example 18. The component of one or more of examples 11-17, wherein the universal robot model file is a Unified Robotics Description Format (URDF) file.

Example 19. The component of one or more of examples 11-18, wherein the instructions further cause the processing circuitry to: receive universal robot model files that include physical descriptions of a plurality of potential cobots having different configurations, or receive joint angles and end-effector positions captured for the plurality of potential cobots having different configurations; generate a plurality of cobot models based on the received universal robot model files or joint angles and end-effector positions of the plurality of potential cobots; and train the neural network model using the plurality of cobot models and a plurality of target end-effector poses.

Example 20. The component of one or more of examples 11-19, wherein the processing circuitry is located in the cloud.

While the foregoing has been described in conjunction with exemplary aspect, it is understood that the term "exemplary" is merely meant as an example, rather than the best or optimal. Accordingly, the disclosure is intended to cover alternatives, modifications and equivalents, which may be included within the scope of the disclosure.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

## Claims

1.  An apparatus, comprising:

    an interface means for receiving a target end-effector pose of a cobot;
    processing means for:

    generating in a generic robot model a joint trajectory based on the target end-effector pose;
    employing a trained neural network model to map the joint trajectory generated in the generic robot model into a cobot model; and
    generating a movement instruction to control a movement of the cobot based on the joint trajectory mapped to the cobot model,

    wherein the generic robot model has a number of degrees of freedom that is equal to or greater than that of the cobot model.

2.  The apparatus of claim 1, wherein the processing means is further for:
    iteratively refining the joint trajectory in the cobot model based on a geometric model of the cobot until the refined joint trajectory reaches a target error threshold.

3.  The apparatus of any of claims 1-2, wherein the generic robot model has redundant degrees of freedom at least equal to those of the cobot model.

4.  The apparatus of any of claims 1-3, wherein the processing means is further for:

    receiving joint angles and end-effector positions captured for the cobot; and
    generating the cobot model based on the joint angles and end-effector positions captured for the cobot.

5.  The apparatus of claim **4,** wherein the processing means is further for training the neural network model using the cobot model and a plurality of target end-effector poses.

6.  The apparatus of any of claims 1-5, wherein the processing means is further for:

    receiving a universal robot model file that includes a physical description of the cobot; and
    generating the cobot model based on the received universal robot model file.

7.  The apparatus of claim 6, wherein the processing means is further for training the neural network model using the cobot model and a plurality of target end-effector poses.

8.  The apparatus of claim 6, wherein the universal robot model file is a Unified Robotics Description Format (URDF) file.

9.  The apparatus of any of claims 1-8, wherein the processing means is further for:

    receiving universal robot model files that include physical descriptions of a plurality of potential cobots having different configurations, or receiving joint angles and end-effector positions captured for the plurality of potential cobots having different configurations;
    generating a plurality of cobot models based on the received universal robot model files or joint angles and end-effector positions of the plurality of potential cobots; and
    training the neural network model using the plurality of cobot models and a plurality of target end-effector poses.

10. The apparatus of any of claims 1-9, wherein the processing means is located in the cloud.

11. A component of a system, comprising:

    processing means; and
    a non-transitory computer-readable storage medium including instructions that, when executed by the processing circuitry, cause the processing means to:

    generate in a generic robot model a joint trajectory based on a target end-effector pose of a cobot;
    employ a trained neural network model to map the joint trajectory generated in the generic robot model into a cobot model; and
    generate a movement instruction to control a movement of the cobot based on the joint trajectory mapped to the cobot model,

wherein the generic robot model has a number of degrees of freedom that is equal to or greater than that of the cobot model.

12. The component of claim 11, wherein the instructions further cause the processing means to:
iteratively refine the joint trajectory in the cobot model based on a geometric model of the cobot until the refined joint trajectory reaches a target error threshold.

13. The component of any of claims 11-12, wherein the generic robot model has redundant degrees of freedom at least equal to those of the cobot.

14. The component of any of claims 11-13, wherein the instructions further cause the processing means to:

   receive joint angles and end-effector positions captured for the cobot; and
   generate the cobot model based on the joint angles and end-effector positions captured for the cobot.

15. The component of claim **14,** wherein the instructions further cause the processing means to train the neural network model using the cobot model and a plurality of target end-effector poses.

# FIG 1A

100A
Calibration Stage Overview

User Input → **110** Cobot → **120** Cloud Service → **130** Generic Robot → **140** NN Model → (−)

FIG 1B

EP 4 670 925 A1

100B
Calibration Stage

Joint Angle
(radians)

$\theta_1$

$\theta_2$

$\theta_3$

Time

$q_{cobot} \in \mathbb{R}^n$

110
Cobot

112
Cobot Trajectories

Joint angles and
End-Effector Positions

Joint Angle
(radians)

$\theta_1$

$\theta_2$

$\theta_3$

$\theta_4$

$\theta_5$

$\theta_6$

Time

130
Generic Robot

132
Solver

132
Generic Robot Trajectories

$q \in \mathbb{R}^m$

140
Neural Network Model

$\tilde{q}_{pred} \in \mathbb{R}^n$

−

142

Model Training

Dataset Generation

# FIG 1C

**134**
Robot Encoder

132
Generic Robot
Trajectories

$q_{gen} \in \mathbb{R}^5$

FC1
Encoder

Rectified
Linear Unit
(ReLU)

ReLU

FC2
Encoder

ReLU

$\oplus$

**150**
Trajectory Decoder

FC3
Encoder

112
Cobot
Trajectories

$q_{cobot} \in \mathbb{R}^3$

Cobot
Configuration

$C_{cobot} \in \mathbb{R}^{4 \times d}$

ReLU

FCD
Encoder

**114**
Cobot Encoder

EP 4 670 925 A1

# FIG 2A

Desired Position or Path

Cobot Configuration

**120**
Cloud Service

**130**
Generic Robot

Joint References

**140**
NN Model

Trajectories

**160**
Refinement

Joint References

EP 4 670 925 A1

13

# FIG 2B

210
User Configuration

User Input

target end-effector pose

220
Generic Model Solution

132
Solver

$q \in \mathbb{R}^m$

130
Generic Robot

110
Cobot

$q_{cobot} \in \mathbb{R}^n$

Final Solution

160
Refinement

$\tilde{q}_{cobot} \in \mathbb{R}^n$

Predicted Solution

Inference

130
Neural Network
Model

240
Solution Refinement

230
Model Inference (Mapping)

# FIG 3A

3 DoF Cobot Arm

**Denavit-Hattenberg Parameters**

| Joint | $\theta_z$ | $d_z$ | $\alpha_x$ | $\Theta_x$ |
|-------|-----------|-------|-----------|-----------|
| 1 | $\Theta_1$ | 0 | 0 | -90 |
| 2 | $\Theta_2$ | $L_1$ | 0 | 90 |
| 3 | $\Theta_3$ | 0 | $L_2$ | 0 |

# FIG 3B

300B
5 DoF Generic Robot Arm

**Denavit-Hattenberg Parameters**

| Joint | $\theta_z$ | $d_z$ | $\alpha_x$ | $\Theta_x$ |
|-------|-----------|-------|-----------|-----------|
| 1 | $\Theta_1$ | 0 | 0 | -90 |
| 2 | $\Theta_2$ | $L_1$ | 0 | 90 |
| 3 | $\Theta_3$+90 | 0 | 0 | 90 |
| 4 | $\Theta_4$ | $L_2$ | 0 | 0 |
| 5 | $\Theta_5$ | $L_3$ | 0 | 0 |

EP 4 670 925 A1

## FIG 3C

Joint Angle (radians)

$\theta_1$

$\theta_2$

$\theta_3$

112

Cobot Trajectories

300C
Joint Trajectories Generated for 3 DoF Cobot Arm

- Desired trajectory
- Solution trajectory
- Home position
- Intermediate position
- Final position

Distance (m)

Distance (m)

End-Effector Displacement

## FIG 3D

Joint Angle (radians)

$\theta_1$

$\theta_2$

$\theta_3$

$\theta_4$

$\theta_5$

132

Generic Robot Trajectories

300D
Joint Trajectories Generated for 5 DoF Generic Robot Arm

- Desired trajectory
- Solution trajectory
- Home position
- Intermediate position
- Final position

Distance (m)

Distance (m)

End-Effector Displacement

# FIG 4

400
Computing Device

410
Processing Circuitry

420
Transceiver

430
Communication Interface

440
Memory

EP 4 670 925 A1

Europäisches
Patentamt

European
Patent Office

Office européen
des brevets

## EUROPEAN SEARCH REPORT

**Application Number**

EP 25 17 8443

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/381658 A1 (MÖNNICH HOLGER [DE] ET AL) 19 December 2019 (2019-12-19) * paragraphs [0009], [0010], [0026], [0032], [0036], [0038]; figure 1 * | 1-15 | INV. B25J9/16 |
| X | CN 118 143 930 A (SHANGHAI KEPLER EXPLOR ROBOT CO LTD) 7 June 2024 (2024-06-07) * paragraphs [0013], [0018], [0019] * | 1-15 | |
| A | TULUHAN AKBULUT M ET AL: "ACNMP: Skill Transfer and Task Extrapolation through Learning from Demonstration and Reinforcement Learning via Representation Sharing", ARXIV.ORG, CORNELL UNIVERSITY LIBRARY, 201 OLIN LIBRARY CORNELL UNIVERSITY ITHACA, NY 14853, 9 November 2020 (2020-11-09), XP081797255, * paragraph [0003] * | 1-15 | |

TECHNICAL FIELDS
SEARCHED (IPC)

B25J

The present search report has been drawn up for all claims

| Place of search | Date of completion of the search | Examiner |
|---|---|---|
| The Hague | 5 October 2025 | Tsirigkas, Dimitrios |

EPO FORM 1503 03.82 (P04C01)

## ANNEX TO THE EUROPEAN SEARCH REPORT
## ON EUROPEAN PATENT APPLICATION NO.

EP 25 17 8443

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2025

| Patent document cited in search report | Publication date | Patent family member(s) | Publication date |
|---|---|---|---|
| US 2019381658 A1 | 19-12-2019 | CN 110587594 A<br>EP 3581340 A1<br>US 2019381658 A1 | 20-12-2019<br>18-12-2019<br>19-12-2019 |
| CN 118143930 A | 07-06-2024 | NONE | |

For more details about this annex : see Official Journal of the European Patent Office, No. 12/82